# EUROPÄISCHE PATENTSCHRIFT

(11) **EP 1 164 324 B1**
(45) Veröffentlichungstag und Bekanntmachung des Hinweises auf die Patenterteilung: **06.05.2004**
(21) Anmeldenummer: 01114119.9
(22) Anmeldetag: 11.06.2001
(51) Int. Cl.: F16K 31/56

(54) **Bistabiles Ventil**
Bistable valve
Vanne bistabile

(30) Priorität: 16.06.2000 DE 10028993
(43) Veröffentlichungstag der Anmeldung: 19.12.2001
(73) Patentinhaber: UST Umweltsensortechnik GmbH, 98716 Geschwenda (DE)
(72) Erfinder: Kiesewetter, Olaf Dr., 98716 Geschwenda (DE); Robertz, Markus, 65396 Walluf (DE); Fahrenbach, Ralf, 98716 Geschwenda (DE)
(74) Vertreter: Liedtke, Klaus, Dr.

(56) Entgegenhaltungen:
- US-A- 3 867 963
- US-A- 3 955 791
- US-A- 5 255 711

## Beschreibung

Die Erfindung betrifft eine Vorrichtung zum Schalten von Gasströmen mit einem beweglichen Ventilkörper, der mit einer an einem Gehäuse angebrachten Membran, welche mit dem Druck des zu steuernden Gasstromes beaufschlagt ist und das Gehäuse verschließt, verbunden ist und durch sie betätigt wird, wobei die Membran und der Ventilkörper eine gemeinsame Öffnung aufweisen, die mit einem Stößel verschließbar ist, der an einem Federelement im Gehäuse so federnd angeordnet ist, dass er eine Sprungeinrichtung bildet und zwei Endlagen einnehmen kann.

Ventilanordnungen mit denen Gasströme geschaltet werden können, sind in vielfältigen Ausführungen bekannt.

Die in vielen Bereichen der Technik fortschreitende Miniaturisierung hat zur Folge, dass an die in miniaturisierten Baugruppen einsatzbaren Steuereinrichtungen hohe Anforderungen gestellt werden. Zu diesen Forderungen gehören insbesondere die Herstellung von robusten, preiswerten und einfachen Einrichtungen, die kostengünstig als Massenartikel hergestellt werden können und zuverlässig arbeiten.

Eine für viele Anwendungsfälle wichtige Forderung ist dabei auch, dass die Ventilanordnung ohne Zuhilfenahme äußerer Energie ein gasförmiges Medium in Abhängigkeit von seinem Druck oder seiner Strömung schalten kann. Dabei soll eine geringe und definiert einstellbare Schalthysterese gewährleistet sein. Unter Schalthysterese wird hierbei die Druckdifferenz zwischen den Druck beim Öffnen und beim Schließen der Schalteinrichtung verstanden.

Aus der US 3,955,791 ist ein Kontrollventil für Fluide bekannt, bei dem ein beweglicher Ventilkörper mit einer an einem Gehäuse angebrachten, verschließbaren Öffnung gekoppelt ist und durch eine Membran betätigt wird, die mit dem Druck des zu steuernden Fluides beaufschlagt ist. Der Ventilkörper ist mit der Membran verbunden und weist eine Öffnung auf, die mit einem Stößel verschließbar ist, wobei der Stößel an einem Federelement im Gehäuse so federnd angeordnet ist, dass er eine Sprungeinrichtung bildet und zwei Endlagen einnehmen kann.

Nachteilig ist daran, dass die Vorgänge des Öffnens und des Schließens durch Anlegen einer elektrischen Spannung beziehungsweise Abschalten dieser Spannung extern gesteuert werden muss. Zudem ist der Sprungvorgang nicht in Abhängigkeit vom Druck des Fluides möglich, insbesondere ist diese Abhängigkeit nicht einstellbar.

Der Erfindung liegt die Aufgabe zugrunde, eine Vorrichtung der eingangs genannten Art anzugeben, die miniaturisierungsfreundlich ist und eine geringe und definiert festlegbare Schalthysterese aufweist.

Die Aufgabe wird erfindungsgemäß mit einer Vorrichtung gelöst, welche die im Patentanspruch 1 angegebenen Merkmale aufweist.

Vorteilhafte Ausgestaltungen sind in den Unteransprüchen angegeben.

Die Erfindung ermöglicht die Anordnung einer Schalteinrichtung in einem rotationssymmetrischen Gehäuse mit geringem Durchmesser, wobei die Vorrichtung sich durch eine einstellbare Schalthysterese auszeichnet.

Damit gestattet die Vorrichtung sowohl den maximale Öffnungsdruck definiert einzustellen und außerdem den minimalen Schließdruck über eine die Hysterese beeinflußende Stellmöglichkeit zu regulieren.

Die Erfindung wird im Folgenden anhand eines Ausführungsbeispiels näher erläutert.

In der zugehörigen Zeichnung zeigen:
- Figur 1: eine schematische Darstellung der erfindungsgemäßen Vorrichtung,
- Figur 2: die perspektivische Schnittansicht einer rotations-Symmetrischen Ausführungsform
und
- Figur 3: eine perspektivische Explosionsdarstellung der Ausführung gemäß Figur 2.

Die in der erfindungsgemäßen Vorrichtung verwendete Anordnung nutzt einen beweglichen Dichtungs- und Strömungsbegrenzungsstift als Regelelement, der durch eine Federwirkung von äußeren Stahlzungen in zwei durch Endansschläge definierte Schaltzustände geschaltet wird. Das System weist zwei durch eine Justiermöglichkeit veränderbare stabile Schaltzustände auf

Ein wichtiger Vorteil der erfindungsgemäßen Anordnung besteht darin, dass die Vorrichtung als rotationssystemmetrische kleine Ventilform mit einstellbarer Hysterese und Maximaldruck realisiert werden kann. Dabei ist der Ventilkörper 2 beweglich an einer Membran aufgehängt und kann relativ zum Außenkörper verschoben werden, wobei über die Feder 7 und die Schraube 8 die maximale Öffnungskraft und über die Justierschraube 6 die Hysterese, d. H. das Spiel des Stößels 5 eingestellt wird. Für die Änderung des Schaltzustandes wird keine zusätzliche Steuerungsenergie benötigt.

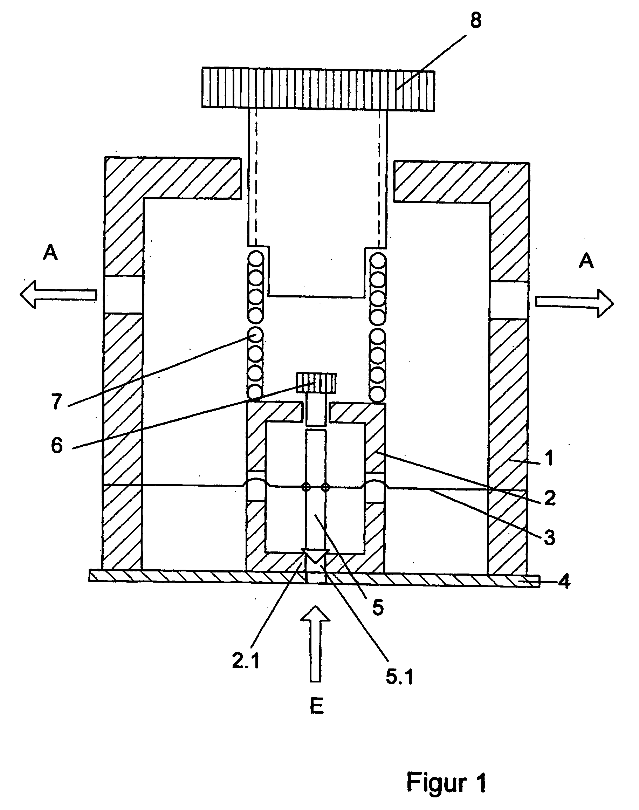

Die in Figur 1 schematisch dargestellte Anordnung besteht aus einem Gehäuse 1, das in Form eines Hohlzylinders gestaltet ist. Das Gehäuse 1 ist unten von einer elastischen Membran 4 verschlossen. An der elastischen Membran 4 ist der Ventilkörper 2 befestigt. Die elastische Membran 4 und der Ventilkörper 2 weisen eine gemeinsame Öffnung auf, die die Einströmöffnung E für das Gas bildet. Die Einströmöffnung E wird von einem linear beweglichen Stößel 5 verschlossen, wobei der Stößel nach oben beweglich ist und in seiner oberen Stellung die Einströmöffnung freigibt. Durch das Verhältnis von Durchmesser der Öffnungsbohrung 2.1 und Ventistößelstift 5.1 wird die Strömungsmenge begrenzt, so dass durch Veränderung der Abmessungen dieser Bauteile die Strömungsmenge definiert beeinflusst werden kann. Eine weitere Möglichkeit zur Beeinflussung der Strömungsmenge besteht durch die Veränderung der porösen Scheiben der Staubfilter 9, z.B. Durch die Wahl unterschiedlicher Bohrungsgrößen.

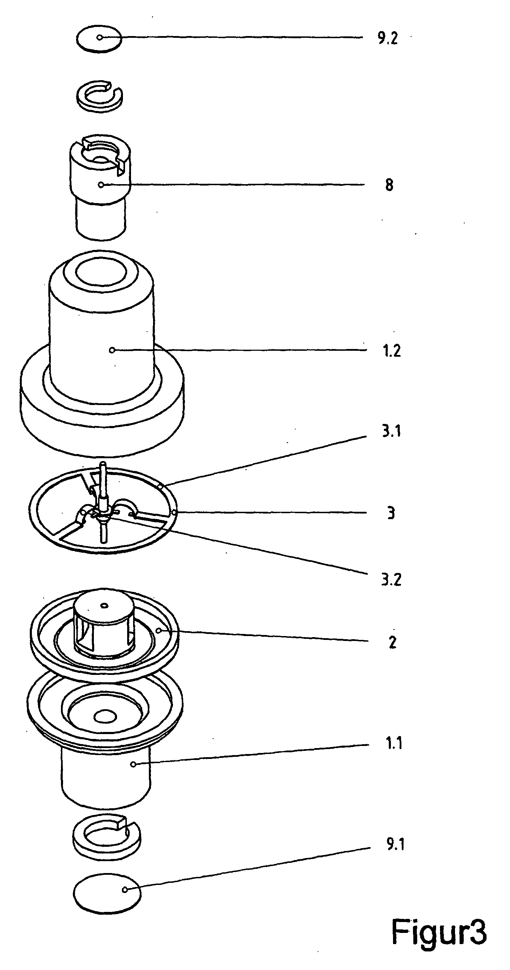

Der Stößel 5 ist über das Federelement 3 mit dem Gehäuse 1 verbunden. Das Federelement 3 weist Zungen 3.1 und Sprungfedern 3.2 auf, wie aus Figur 3 ersichtlich ist, und ermöglicht damit eine translatorische Bewegung des Stößels 5. Dabei wird die Bewegung durch die Sprungfedern 3.2 entweder in eine obere oder eine untere Endstellung zwangsgeführt. Nur in diesen beiden Endstellungen nimmt der Stößels 5 eine stabile Lage ein. Mit Hilfe der Justierschraube 6 kann der Hub des Stößels 5 eingestellt werden. Im Ventilkörper 2 befinden sich Öffnungen, durch die das Federelement 3 ragt. Der Ventilkörper 2 wird durch eine Druckfeder 7 nach unten gedrückt und liegt somit mit einer Vorspannung auf der Membran 4 auf oder ist mit dieser fest verbunden. Diese Vorspannung ist mit Hilfe der Krafteinstellschraube 8 einstellbar.

Der zu schaltende Gasstrom befindet sich unterhalb der Membran 4. Dabei verschließt der am Stößel 5 angearbeitete Ventilstößelstift 5.1 die Öffnungsbohrung 2.1. Steigt der Druck des Gasstromes an, dann bewegt sich die Membran 4 mit dem Ventilkörper 2 nach oben und nimmt damit den Stößel 5 soweit mit bis dieser aus seiner unteren stabilen Lage in die obere stabile Lage schnappt. Dies erfolgt sprungartig an einer nur vom Druck abhängigen Position. Die obere Lage wird durch die Justierschraube 6 definiert begrenzt. Befindet sich der Stößel 5 in der oberen Lage ist die Einströmöffnung freigegeben und der Gasstrom kann über den Ventilkörper 2 in das Gehäuse 1 einströmen. Durch die Ausströmöffnungen A tritt der Gasstrom wieder aus dem Gehäuse aus. Unterschreitet der Gasdruck in dem Raum unterhalb der Membran 4 einen gewissen Schwellenwert, dann bewegt sich die Membran 4 soweit nach unten, dass der mit ihr bewegte Stößel 5 wieder aus seiner stabilen oberen Lage in die stabile untere Lage springt und damit die Einlassöffnung wieder verschlossen wird.

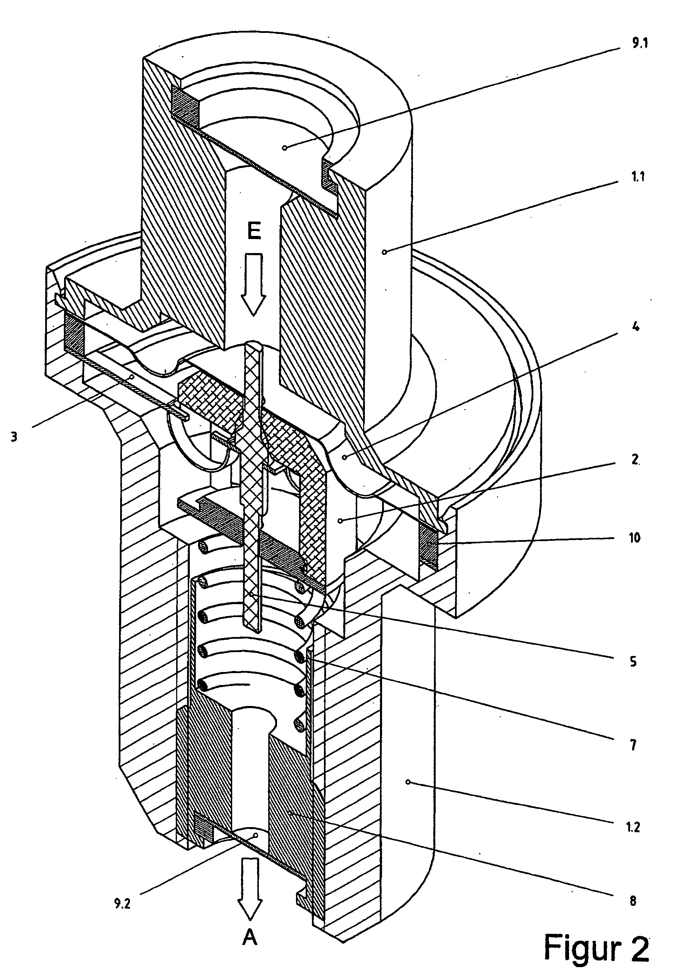

Die Figuren 2 und 3 zeigen eine weitere konstruktive Ausführungsform in einer rotationssymmetrischen Anordnung. Hierbei besteht das Gehäuse 1 aus einem Gehäuseoberteil 1.1 und einem Gehäuseunterteil 1.2. An der in Form einer deformierten Kreisschreibe ausgebildeten Membran 4 ist der Ventilkörper 2 befestigt. Im Inneren des Ventilkörpers 2 ist der Stößel 5 axial verschiebbar angeordnet. Der Stößel 5 ist mit dem Federelement 3 fest verbunden. Das Federelement 3 weist einen äußeren Ring auf, der zwischen Gehäuseoberteil 1.1 und Gehäuseunterteil 1.2 eingeklemmt ist. Die Einklemmung erfolgt dabei über einem Abstimmring 10, mit dem der Abstand von 1.1 und 1.2 verändert werden kann, und damit der Hub des Stößels 5 verändert werden kann. Der äußere Ring des Federelements 3 ist mit drei Zungen 3.1 verbunden, an denen Sprungfedern 3.2 angeordnet sind. An den inneren Enden der Sprungfedern 3.2 ist der Stößel 5 befestigt. Die auf die Membran 4 über den Ventilkörper 2 wirkende Kraft wird von der Schraubenfeder 7 erzeugt, wobei die Vorspannung der Schraubenfeder 4 durch die Krafteinstellschraube 4 verändert werden kann. Der Lufteintritt im oberen Bereich erfolgt durch das poröse Einlassstaubfilter 9.1 und der Luftaustritt A im unteren Bereich durch das poröse Auslassstaubfilter 9.2.

### BEZUGSZEICHENLISTE

- 1: Gehäuse
1.1 Gehäuseoberteil
1.2 Gehäuseunterteil
- 2: Ventilkörper
2.1 Ventilöffnungsbohrung
- 3: Federelement
3.1 Zungen
3.2 Sprungfeder
- 4: Membran
- 5: Stößel
5.1 Ventilstößelstift
- 6: Justierschraube
- 7: Druckfeder
- 8: Krafteinstellschraube
- 9: Staubfilter
9.1 Einlaßfilter
9.2 Auslaßfilter
- 10: Abstimmring
- A: Ausströmöffnung
- E: Einströmöffnung

## Patentansprüche

1. Vorrichtung zum Schalten von Gasströmen mit einem beweglichen Ventilkörper (2), der mit einer an einem Gehäuse (1) angebrachten Membran (4), welche mit dem Druck des zu steuernden Gasstromes beaufschlagt ist und das Gehäuse (1) verschließt, verbunden ist und durch sie betätigt wird, wobei die Membran (4) und der Ventilkörper (2) eine gemeinsame Öffnung aufweisen, die mit einem Stößel (5) verschließbar ist, der an einem Federelement (3) im Gehäuse (1) so federnd angeordnet ist, dass er eine Sprungeinrichtung bildet und zwei Endlagen einnehmen kann, **dadurch gekennzeichnet, dass** das Federelement (3) ein ringförmiges Randteil aufweist, an dem radial nach innen ragenden Zungen (3.1) angeordnet sind, die jeweils ein Ende einer Druckfeder (3.2) tragen und am anderen Ende der Druckfedern (3.2) der Stößel (5) befestigt ist.

2. Vorrichtung nach Anspruch 1, **dadurch gekennzeichnet, dass** am Ventilkörper (2) eine Justiereinrichtung angeordnet ist, mit der die Hubbewegung des Stößels (5) einstellbar ist.

3. Vorrichtung nach Anspruch 2, **dadurch gekennzeichnet, dass** die Hubbewegung des Stößels (5) durch eine Stellschraube (6) einstellbar ist.

4. Vorrichtung nach Anspruch 2, **dadurch gekennzeichnet, dass** die Hubbewegung des Stößels (5) durch einen Abstimmring (10) einstellbar ist.

5. Vorrichtung nach einem der vorhergehenden Ansprüche, **dadurch gekennzeichnet, dass** das die Durchflußmenge des Gases bestimmende Verhältnis von Durchmesser der Ventilöffnungsbohrung (2.1) und Ventilstößelstift (5.1) veränderbar ist.

## Claims

1. Device for switching gas flows using a movable valve body (2) which is connected to and actuated by a diaphragm (4) which is attached to a casing (1), pressurized by the pressure of the gas flow to be controlled, and closing the casing (1), with diaphragm (4) and valve body (2) presenting a common opening closable by a tappet (4) which is located at a spring element (3) in the casing (1) and spring-mounted so as to form a jump device and can go to two final positions, **characterized in that** the spring element (3) presents a ring-shaped border part at which tongues (3.1) are arranged which are projecting radially toward the inside, each carrying one end of a pressure spring (3.2), and the tappet (5) is fastened to the other end of the pressure springs (3.2).

2. Device as claimed in claim 1, **characterized in that** an adjusting device allowing the adjustment of the tappet's (5) stroke movement is located at the valve body (2).

3. Device as claimed in claim 2, **characterized in that** the stroke movement of the tappet (5) is adjustable using an adjusting screw (6).

4. Device as claimed in claim 2, **characterized in that** the stroke movement of the tappet (5) is adjustable using a tuner ring (10).

5. Device as claimed in any of the above claims, **characterized in that** the ratio of valve opening bore (2.1) to valve tappet pin (5.1), determining the gas flow rate, is variable.

## Revendications

1. Dispositif pour la commutation de flux de gaz avec un corps de soupape mobile (2), relié à une membrane (4) appliquée sur un carter (1), soumise à la pression du flux de gaz à conduire et obturant le carter (1), par laquelle le corps de soupape est activé, ladite membrane (4) et le corps de soupape (2) présentant une ouverture commune obturable par un poussoir (5) élastiquement disposé contre un élément à ressort (3) dans le carter (1) de manière à former un mécanisme à détente et pouvoir prendre deux positions finales, **caractérisé en ce que** l'élément à ressort (3) présente une partie annulaire en bordure, contre laquelle sont radialement disposées des languettes (3.1) saillant vers l'intérieur, supportant chacune une extrémité d'un ressort de pression (3.2), le poussoir (5) étant fixé à l'autre extrémité des ressorts de pression (3.2).

2. Dispositif selon la revendication 1, **caractérisé en ce qu'**un mécanisme de réglage est disposé contre le corps de soupape (2), au moyen duquel la course du poussoir (5) est réglable.

3. Dispositif selon la revendication 2, **caractérisé en ce que** la course du poussoir (5) est réglable par une vis de réglage (6).

4. Dispositif selon la revendication 2, **caractérisé en ce que** la course du poussoir (5) est réglable par une bague de mise au point (10).

5. Dispositif selon l'une des revendications précédentes, **caractérisé en ce que** le rapport entre les diamètres de l'alésage d'ouverture de soupape (2.1) et de la tige de poussoir de la soupape (5.1), définissant le débit du gaz, est modifiable.
